# EUROPEAN PATENT SPECIFICATION

(11) **EP 1 412 242 B1**
(45) Date of publication and mention of the grant of the patent: **02.08.2006**
(21) Application number: 02749450.9
(22) Date of filing: 02.08.2002
(51) Int. Cl.: B62D 7/18

(54) **VEHICLE CORNER MODULE AND ASSEMBLY COMPRISING SUCH MODULE**
BAUGRUPPE FÜR EINE LENKBARE FAHRZEUGACHSE UND EINRICHTUNG MIT EINER SOLCHEN BAUGRUPPE
MODULE D'ANGLE DE VEHICULE ET ASSEMBLAGE COMPRENANT LEDIT MODULE

(30) Priority: 03.08.2001 NL 1018697
(43) Date of publication of application: 28.04.2004
(73) Proprietor: AB SKF, S-415 50 Göteborg (SE)
(72) Inventor: TANKE, Jesko-Henning, D-97422 Schweinfurt (DE); DITTMAR, Rico, D-98574 Schmalkalden (DE); KAPAAN, Hendrikus, Jan, NL-3435 DM Nieuwegein (NL); KARLSSON, Mats, Arne, Kurt, S-Gothenburg (SE); MEANEY, Paul, Bernard, NL-3584 GS Utrecht (NL)
(74) Representative: van Westenbrugge, Andries
(86) International application number: PCT/NL2002/000525
(87) International publication number: WO 2003/011676

(56) References cited:
- DE-A- 19 820 413
- US-A- 1 992 065
- US-A- 2 039 912

## Description

The invention is related to a vehicle e.g. truck or trailer corner module, comprising a knuckle and a kingpin, which is rotatable with respect to the knuckle, said kingpin being provided with means for immovable connection to the fork shaped end of a vehicle axle.

Such a vehicle corner is disclosed in DE-A-19820413. Said prior art vehicle corner module comprises a kingpin, which protrudes at both ends through the teeth of the fork. The kingpin is preloaded by means of a screw connection and two sets of belvil washers located near the top end and the bottom end. The sets of belvil washers provide the module with a certain degree of flexibility, which makes it unsuitable for heavily applications, such as for trucks or lorries.

The object of the invention is to provide a vehicle corner module of the type described before, which is better, fit for such heavily loaded applications, easy to assemble in in-line production and easy to maintain. This object is achieved in that the kingpin has opposite ends, which are to bear against the facing surfaces of the teeth of the fork. The possibility of a stiff fixation of the module with respect to the vehicle suspension makes the module fit for carrying heavy loads. Preferably, the opposite ends of the kingpin and the respective opposite fork surfaces are of a corresponding shape. Furthermore, said opposite ends of the kingpin may have screwthreaded holes for accommodation of a respective connection screw.

The kingpin is supported with respect to the knuckle by means of rolling element bearings, preferably with full complement ball or roller sets.. The outer ring(s) of the rolling element bearings is (are) supported on a correspondingly shaped bore of the knuckle. Preferably, two rolling element bearings are provided which have a split outer ring. The outer rings and the bores of the knuckle may have a corresponding stepped shapes, the wider part of said stepped shape being positioned above the narrower shaped part. In particular, the rolling element bearings may be taper roller bearings in back-to-back arrangement and full complement, but other types of rolling element bearings, such as ball bearings or combinations, are also possible. The inner raceways of the bearings may be integrated in the kingpin.

The kingpin may be part of a maintenance free, preloaded, lubricated and sealed for life unit inserted in the kingpin/knuckle housing.

The invention is furthermore related to an assembly comprising a vehicle corner module as described before and a vehicle suspension with a fork shaped end, the kingpin of said module being fixedly connected to said fork shaped end. According to the invention, the kingpin has opposite ends, which are clamped between the facing surfaces of the teeth of the fork. Preferably, the teeth of the fork have bolt holes, and the opposite ends of the kingpin have screwthreaded holes, the kingpin being connected to the fork shaped end by means of bolts inserted through the bolt holes and screwed into the corresponding screwthreaded holes.

The invention will now be described further with reference to the figures.
Figure 1 shows a knuckle for the vehicle corner module according to the invention in cross section and perspective.
Figure 2 shows the knuckle in perspective.
Figure 3 shows the knuckle in the view of figure 1, together with a bearing arrangement.
Figure 4 shows the vehicle corner module according to the invention in cross section and in perspective.
Figure 5 shows the vehicle corner module in perspective.
Figure 6 shows the step of assembling the vehicle corner module according to figures 4 and 5 with the vehicle suspension.
Figure 7 shows the complete assembly in cross section and in perspective.
Figures 8, 9 and 10 show further views of the complete assembly.

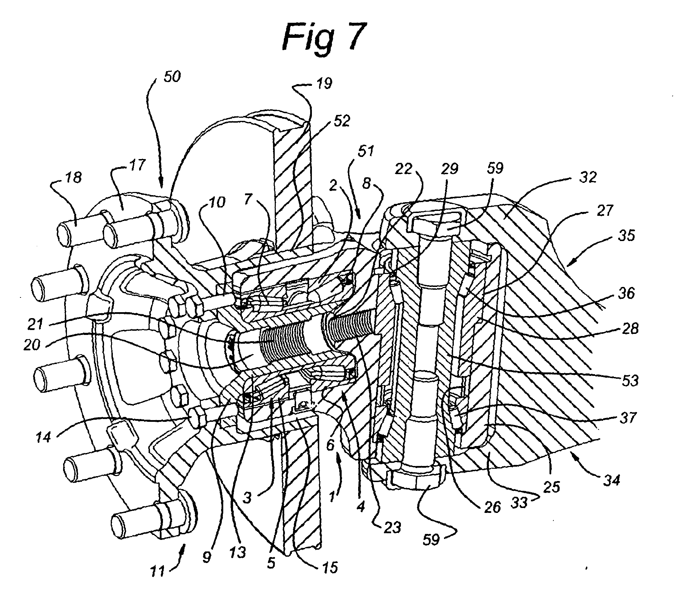

The assembly according to figure 7 consists of a hub bearing unit 50 and a vehicle suspension 35. This truck hub bearing unit 50 in turn consists of a vehicle corner module 51 having a corner housing or knuckle, which is provided with a bore 2, in which two taper roller bearings 3, 4 are accomodated. These taper roller bearings 3, 4 are arranged in "O"configuration.

The taper roller bearings 3, 4 have a common inner ring 13, and two separate outer rings 5, 6. Two sets of taper rollers with a cage or full complement 7, respectively 8 are in contact with the raceways of the inner ring 13 and the outer rings 3, respectively 4.

The inner ring means 13 has a radially outwardly protruding flange 9, which has regularly spaced screw threaded holes 10. Onto the flange 9, a hub 11 is mounted by means of screws 14, which are screwed into the screw threaded holes 10. The hub 11 has a sleeve 12, which overlaps the corner housing 1, while leaving free a gap 15.

A sensor can be separately mounted or integrated in the kingpin arrangement for controlling/measuring the angular displacement of the corner knuckle.

The hub has a radially outwardly extending flange 17, which carries screw threaded studs 18 onto which a wheel with wheel nuts (not shown) can be mounted. Furthermore, a brake disc 19 is mounted onto the disc mounting part 52 of the sleeve 12.

The common inner ring 9 has a bore 20 provided with an internal screw thread 21, and the corner housing has an abutment 22. By screwing a screw into the screw threaded part 21 and abutting this screw onto the abutment 22, the inner ring 9 together with the complete bearings 3, 4 can be dismounted.

Furthermore, the corner housing itself also has a screw threaded bore 23. By means of a screw (not shown) which is screwed in the screw threaded bore 23, and which bears for instance against the outer end of the flange 9, the wheel bearings outer ring consisting of 3, 4 can be mounted into the corner housing 1.

Furthermore, the corner housing 1 is provided with a king pin fixing means 25, which has a through going bore with stepped portions 26, 27. Into this stepped bore, the outer ring 28 of a similar stepped shape is fitted by means of a spring clip 29. This outer ring 28 forms part of the kingpin means 30, which by means of bolts 31 is connected to the teeth 32, 33 of a fork 34, which is integrated with the vehicle suspension 35.

The outer ring means 28 forms part of the two taper roller 5 bearings 36, 37, the raceways of which are integrated in respectively the outer ring means 28 and the kingpin 53 itself.

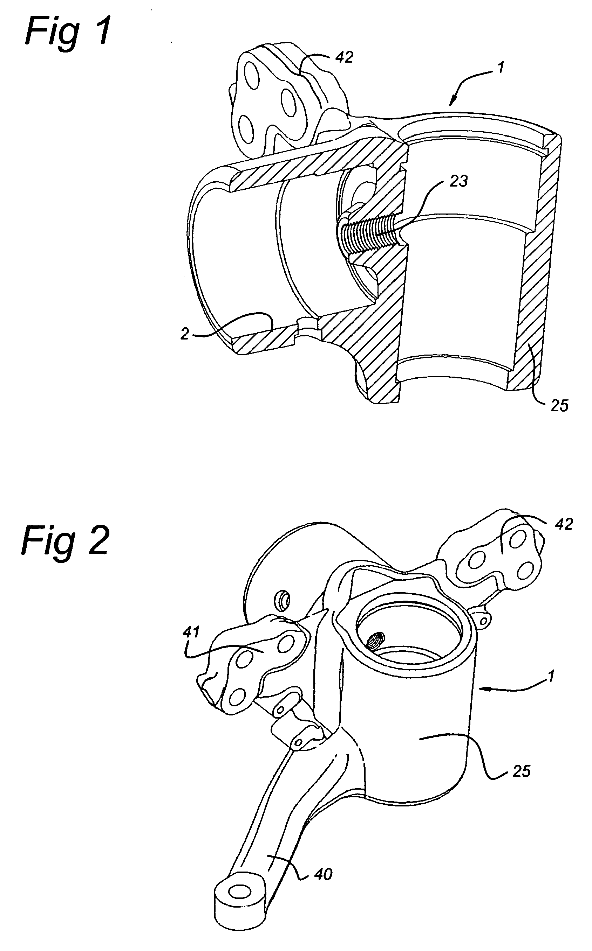

Figure 1 and 2 show the corner housing or knuckle 1 in isolation. This corner housing 1 is integrated with a lever arm 40 for engagement with a steering rod of the vehicle's steering system (not shown), as well as ears 41, 42, for mounting a brake calliper which can engage the brake disc 19. Furthermore, an encoder sensor for ABS/wheel bearing speed may be integrated in the corner housing 1.

According to another preferred execution the knuckle can be split dividing the knuckle in a kingpin/wheel bearing part and a fixation part to carry the brake calliper and steering fixations.

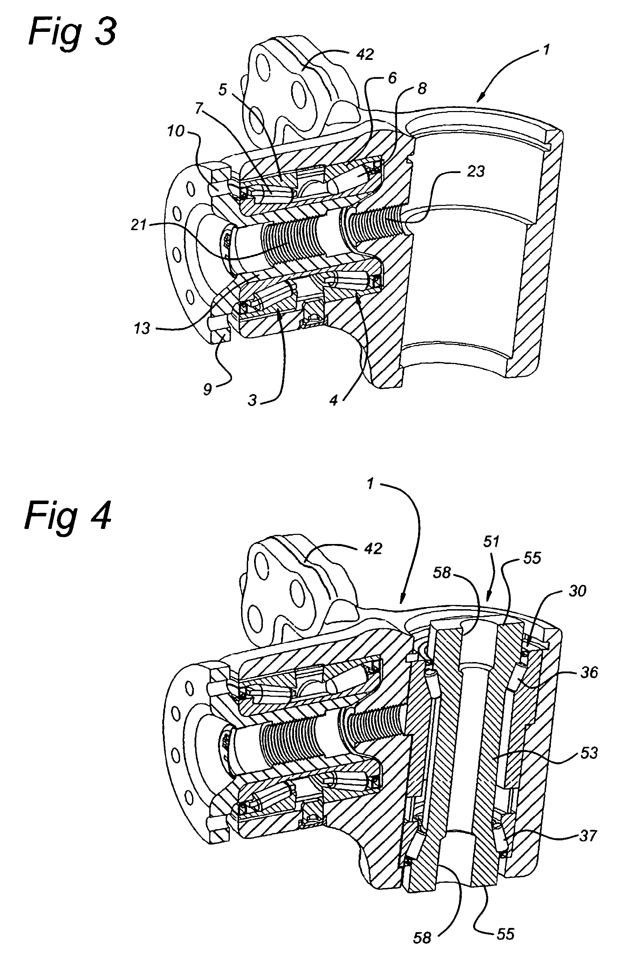

Figure 3 shows the corner housing according to figures 1 and 2 together with the wheel taper roller bearing 3, 4 in "O"configuration or in back to back arrangement

Figure 4 shows the complete vehicle corner module 51, comprising a corner housing 1 for separate bearings and the kingpin means 30.

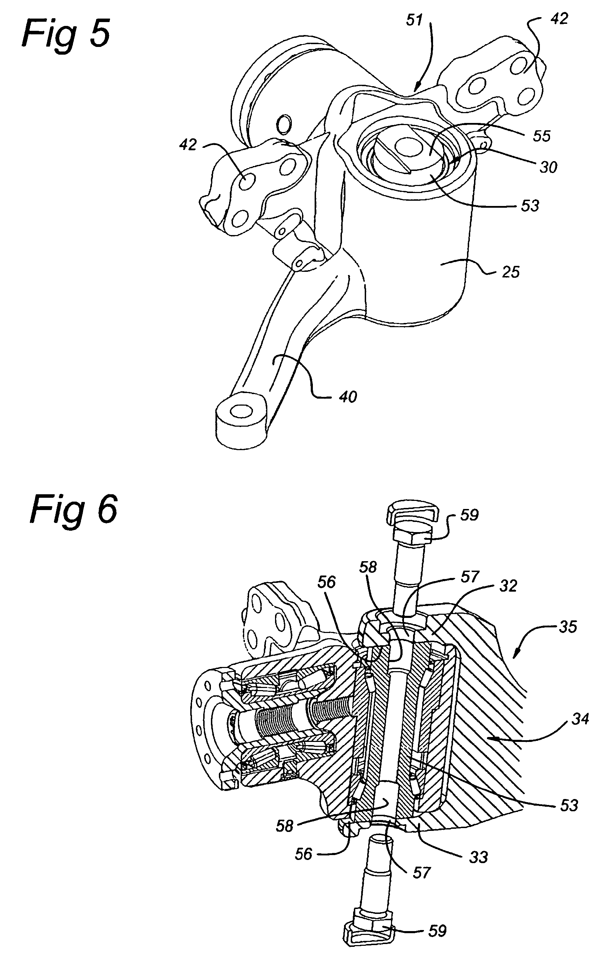

Figure 5 shows the complete vehicle corner module 51 in perspective.

The kingpin 53 has flat end faces 55, which, as shown in figure 6, come to bear against the facing surfaces 56 of the teeth 32, 33 of the fork 35 of the vehicle axle 34. The teeth 32, 33 have holes 57, and the opposite ends of the kingpin 53 have screwthreaded bores 58. By means of bolts 59 the teeth 32, 33 are clamped firmly onto the surfaces 55 of the kingpin 53.

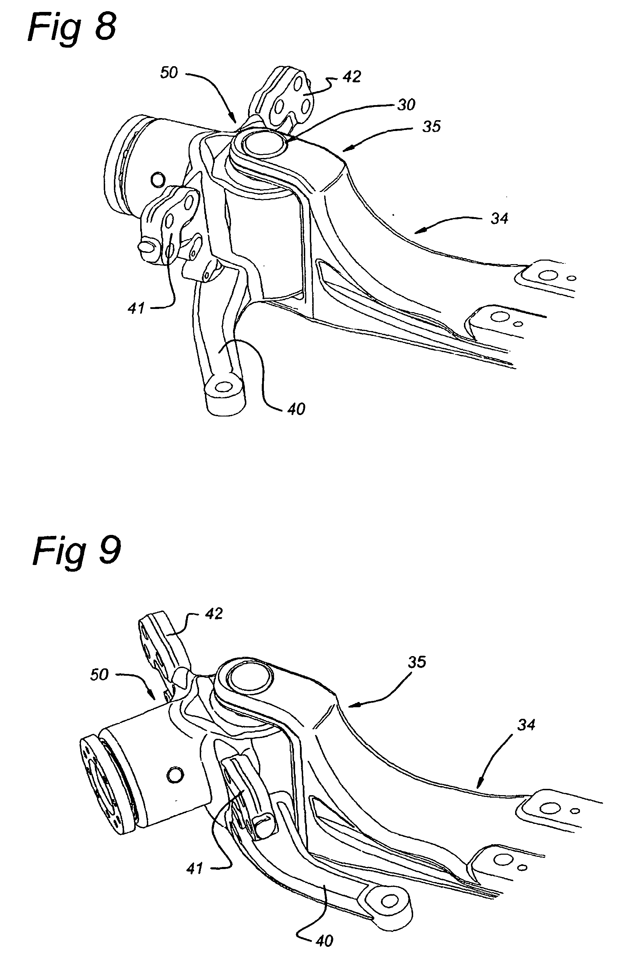

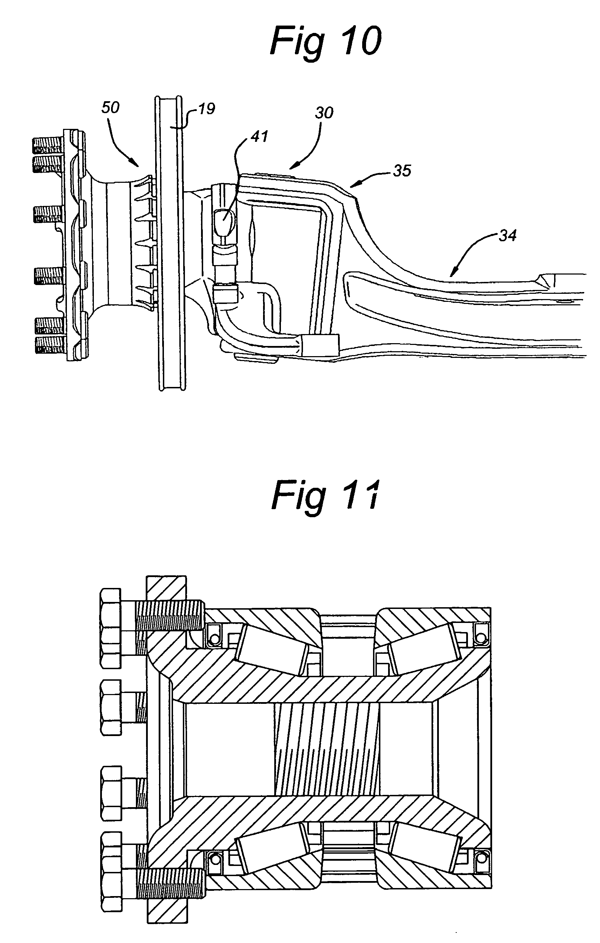

As shown in figure 8 and 9, the truck wheel hub bearing unit 50 may be angular displaced over a fairly large angle. The front view of figure 10 shows the complete truck hub bearing unit including a brake disc brake 19 and axle 34.

The rolling element bearings 36, 37 can be preloaded, or can be provided with a certain play. The split outer rings 28 of the rolling element bearings 36, 37 can have different outer diameters in view of load transfer. The rolling element bearings 36, 37 can also comprise full complement roller sets.

The kingpin 53 can furthermore form part of a maintenance free, preloaded, lubricated and sealed for life unit. Moreover, a separately integrated sensor for controlling angular displacements can be incorporated. The corner knuckle can be made of metallic and non-metallic composite materials. In the alternative, forging or cast iron can be possible. The lubricant can be grease or liquid, e.g. traction oil. Alternatively, the kingpin bearing can also consist of separate bearings, which are preloaded on a separate central kingpin shaft.

## Claims

1. Truck/or vehicle corner module (51), comprising a knuckle (1) and a kingpin (53), which is rotatable with respect to the knuckle (1), said kingpin (53) being provided with means for immovable connection (55, 58) to the fork shaped end (34) of a vehicle suspension (35), **characterised in that** the kingpin (53) has opposite ends (55) which are to bear against and fixed between the facing surfaces (56) of the teeth (32, 33) of the fork shaped end (34).

2. Module according to claim 1, wherein the opposite ends (55) of the kingpin (53) and the respective opposite fork surfaces (56) are of a corresponding shape.

3. Module according to claim 1 or 2, wherein the opposite ends (55) of the kingpin (53) have screwthreaded bores (58) for accommodation of a respective connection screw (59).

4. Module according to any of the preceding claims, wherein the kingpin (53) is supported with respect to the knuckle (1) by means of rolling element bearings (36, 37).

5. Module according to claim 4, wherein the outer ring(s) (28) of the rolling element bearings (36, 37) is (are) supported on a correspondingly shaped bore (26, 27) of the knuckle (1).

6. Module according to claim 5, wherein two rolling element bearings (36, 37) are provided, which have a split outer ring (28) or a common outer ring..

7. Module according to claim 6, wherein the outer ring (28) and the bore (26, 27) of the knuckle (1) have a corresponding stepped shape, the wider part (27) of said stepped shape being positioned above the narrower shaped part (26).

8. Module according to claim 6 or 7, wherein the rolling element bearings (36, 37) are taper roller bearings in back-to-back arrangement or "O" arrangement, the rolling bearings have full complement roller sets.

9. Module according to claim 6, 7 or 8, wherein the inner raceways of the bearings (36, 37) are integrated in the kingpin (53).

10. Assembly comprising a module (51) according to any of the preceding claims and a vehicle suspension (35) with a fork shaped end (34), the kingpin (53) of said module (51) being fixedly connected to said fork shaped end (34), **characterised in that** the kingpin (53) has opposite ends (55), which are clamped between the facing surfaces (56) of the teeth (32, 33) of the fork shaped end (34).

11. Assembly according to claim 10, wherein the teeth (32, 33) of the fork shaped end (34) have bolt holes (57), and the opposite ends (55) of the kingpin (53) have screwthreaded bores (58), the kingpin (53) being connected to the fork shaped end (34) by means of bolts (59) inserted through the bolt holes (57) and screwed into the corresponding screwthreaded holes (58).

## Patentansprüche

1. Lenkbares Radmodul (51) eines Lastwagens oder Fahrzeugs mit einem Gelenk (1) und einem Achsschenkel (53) der in Bezug auf das Gelenk (1) drehbar ist, wobei der Achsschenkel (53) mit Mitteln zur unbeweglichen Verbindung (55, 58) mit dem gabelförmigen Ende (34) einer Fahrzeugaufhängung (35) versehen ist, **dadurch gekennzeichnet, daß** der Achsschenkel (53) entgegengesetzt liegende Enden (55) besitzt, die zur Anlage an und Befestigung zwischen den einander zugewandten Flächen (56) der Vorsprünge (32, 33) des gabelförmigen Endes (34) vorgesehen sind.

2. Modul nach Anspruch 1, bei welchem die entgegengesetzt liegenden Enden (55) des Achsschenkels (53) und die jeweiligen entgegengesetzten Gabelflächen (53) eine korrespondierende Form besitzen.

3. Modul nach Anspruch 1 oder 2, bei welchem die entgegengesetzt liegenden Enden (55) des Achsschenkels (53) Gewindebohrungen (58) zur Aufnahme einer jeweiligen Verbindungsschraube (59) besitzen.

4. Modul nach einem der vorhergehenden Ansprüche, bei welchem der Achsschenkel (53) mit Bezug auf das Gelenk (1) mit Hilfe von Wälzlagern (36, 37) abgestützt ist.

5. Modul nach Anspruch 4, bei welchem der Außenring/die Außenringe (28) der Wälzlager (36, 37) an einer entsprechend geformten Bohrung (26, 27) des Gelenks (1) abgestützt ist/sind.

6. Modul nach Anspruch 5, bei welchem zwei Wälzlager (36, 37) vorgesehen sind, die einen geteilten Außenring (28) oder einen gemeinsamen Außenring haben.

7. Modul nach Anspruch 6, bei welchem der Außenring (28) und die Bohrungen (26, 27) des Gelenks (1) eine einander entsprechende, gestufte Form haben, wobei der weitere Teil (27) der gestuften Form oberhalb des enger geformten Teils (26) angeordnet ist.

8. Modul nach Anspruch 6 oder 7, bei welchem sich die Wälzlager (36, 37) Kegelrollenlager in einer Rücken-an-Rücken-Anordnung oder "O"-Anordnung befinden, wobei die Wälzlager vollständig bestückte Walzensätze aufweisen.

9. Modul nach Anspruch 6, 7 oder 8, bei welchem die inneren Laufbahnen der Lager (36, 37) in den Achsschenkel (53) integriert sind.

10. Vorrichtung mit einem Modul (51) nach einem der vorhergehenden Ansprüche und einer Fahrzeugaufhängung (35) mit einem gabelförmigen Ende (34), wobei der Achsschenkel (53) des Moduls (51) fest mit den gabelförmigen Enden (34) verbunden ist, **dadurch gekennzeichnet, daß** der Achsschenkel (53) entgegengesetzt liegende Enden (55) aufweist, die zwischen den einander zugewandten Flächen (56) der Vorsprünge (32, 33) des gabelförmigen Endes (34) verklemmt sind.

11. Vorrichtung nach Anspruch 10, bei welcher die Vorsprünge (32, 33) des gabelförmigen Endes (34) Bolzenlöcher (57) aufweisen und die entgegengesetzt liegenden Enden (55) des Achsschenkels (53) Gewindebohrungen (58) haben, wobei der Achsschenkel (53) mit dem gabelförmigen Ende (34) mit Hilfe von Bolzen (59) verbunden ist, die durch die Bolzenlöcher (57) eingefügt und in die entsprechenden Gewindebohrungen (58) eingeschraubt sind.

## Revendications

1. Module de pivot de roue (51) pour camion ou véhicule, comprenant un joint d'articulation (1) et un pivot (53), qui peut tourner par rapport au joint d'articulation (1), ledit pivot (53) étant muni d'un moyen permettant la connexion immobile (55, 58) à l'extrémité fourchue (34) d'une suspension de véhicule (35), **caractérisé en ce que** le pivot (53) a des extrémités opposées (55) qui sont destinées à porter sur et à être fixées entre les surfaces en vis-à-vis (56) des dents (32, 33) de l'extrémité fourchue (34).

2. Module selon la revendication 1, dans lequel les extrémités opposées (55) du pivot (53) et les surfaces de fourche opposées respectives (56) ont une forme correspondante.

3. Module selon la revendication 1 ou 2, dans lequel les extrémités opposées (55) du pivot (53) ont des trous filetés (58) destinés à recevoir une vis d'assemblage respective (59).

4. Module selon l'une quelconque des revendications précédentes, dans lequel le pivot (53) est supporté par rapport au joint d'articulation (1) au moyen de roulements (36, 37).

5. Module selon la revendication 4, dans lequel la ou les bague(s) extérieure(s) (28) des roulements (36, 37) est (sont) supportée(s) sur un alésage de forme correspondante (26, 27) du joint d'articulation (1).

6. Module selon la revendication 5, dans lequel deux roulements (36, 37) sont prévus, ayant une bague extérieure distincte (28) ou une bague extérieure commune.

7. Module selon la revendication 6, dans lequel la bague extérieure (28) et l'alésage (26, 27) du joint d'articulation (1) ont une forme étagée correspondante, la partie la plus large (27) de ladite forme étagée étant positionnée au-dessus de la partie la plus étroite (26).

8. Module selon la revendication 6 ou 7, dans lequel les roulements (36, 37) sont des roulements à rouleaux coniques en agencement dos-à-dos ou en agencement en "O", les roulements ayant des ensembles d'éléments roulants jointifs.

9. Module selon la revendication 6, 7 ou 8, dans lequel les chemins de roulement intérieurs des roulements (36, 37) sont intégrés au pivot (53).

10. Ensemble comprenant un module (51) conforme à l'une quelconque des revendications précédentes et une suspension de véhicule (35) ayant une extrémité fourchue (34), le pivot (53) dudit module (51) étant assemblé de manière fixe à ladite extrémité fourchue (34), **caractérisé en ce que** le pivot (53) a des extrémités opposées (55), qui sont prises entre les surfaces en vis-à-vis (56) des dents (32, 33) de l'extrémité fourchue (34).

11. Ensemble selon la revendication 10, dans lequel les dents (32, 33) de l'extrémité fourchue (34) comportent des trous de boulons (57), et les extrémités opposées (55) du pivot (53) comportent des trous filetés (58), le pivot (53) étant assemblé à l'extrémité fourchue (34) au moyen de boulons (59) insérés dans les trous de boulons (57) et vissés dans les trous filetés (58) correspondants.
